# EUROPEAN PATENT APPLICATION

(11) **EP 1 388 881 A2**
(43) Date of publication of application: **11.02.2004**
(21) Application number: 03017775.2
(22) Date of filing: 04.08.2003
(51) Int. Cl.: H01J 29/86

(54) **Glass bulb for a cathode ray tube and cathode ray tube**

(30) Priority: 05.08.2002 JP 2002227527
(71) Applicant: Asahi Glass Company, Limited, Chiyoda-ku, Tokyo 100-8405 (JP)
(72) Inventor: Sugawara, Tsunehiko, 1-chome, Funabashi-shi, Chiba (JP); Murakami, Toshihide, 1-chome, Funabashi-shi, Chiba (JP); Ueki, Mikio, 1-chome, Funabashi-shi, Chiba (JP)
(74) Representative: Müller-Boré & Partner Patentanwälte

(57) **Abstract**

There is provided a glass funnel for a cathode ray tube, which has a deflection angle of 120 deg or more, which has a concave portion in a funnel body portion around a yoke portion so as to have a depth of 10 mm or more, wherein a compressive stress layer is formed in a position where a tensile stress, which is generated on an outer surface of the funnel body portion, takes a maximum value σ_{VTmax}, the compressive stress layer has a compressive stress value σ_{c} of 80 to 350 MPa, the compressive stress layer has a thickness of 60 µm or more, and the maximum value σ_{VTmax} is 10 to 100 MPa.

## Description

The present invention is related to a glass bulb for a cathode ray tube and a cathode ray tube, which is mainly utilized in an image display unit, such as a television receiver or a computer monitor.

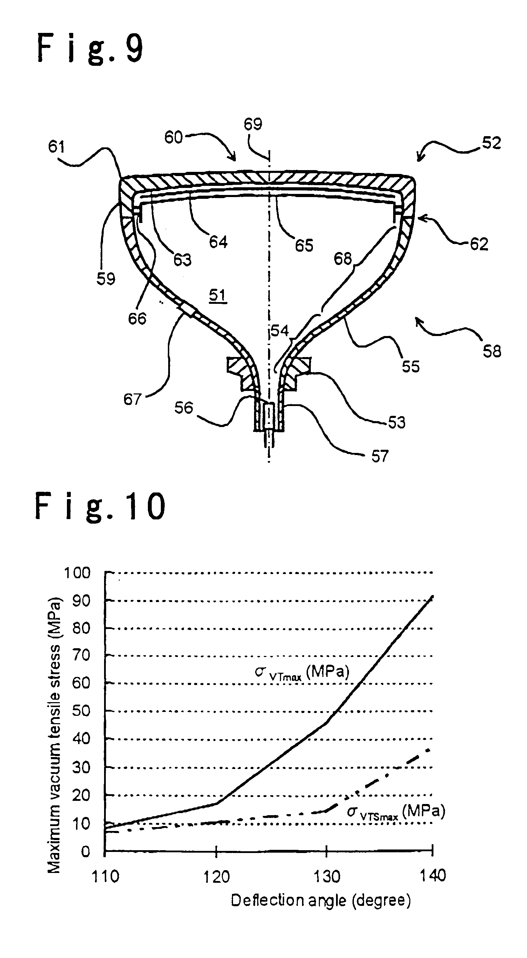

Fig. 9 shows a conventional cathode ray tube 51 in section. As shown in this figure, the cathode ray tube 51 includes an envelope, which is a glass bulb 58 (hereinbelow, also referred to as "bulb") 58 comprising a glass panel for displaying an image (hereinbelow, also referred to as "panel") 52, a glass funnel (hereinbelow, also referred to as "funnel") 55 literally formed in a funnel-like shape and having a yoke portion 54 for mounting deflection coils 53 thereon, and a neck portion 57 for housing an electron gun 56 therein.

In Fig. 9, reference numeral 59 designates a skirt portion, reference numeral 60 designates a face portion for displaying an image, reference numeral 61 designates a blend R portion coupling the skirt portion 59 and the face portion 60, reference numeral 62 designates a sealed portion, at which the panel 52 and the skirt portion 59 are sealed with, e.g., solder glass, reference numeral 63 designates a fluorescent screen, which generates fluorescence by irradiation of an electron beam, reference numeral 64 designates an aluminum film, which reflects the fluorescence forwardly, reference numeral 65 designates a shadow mask, which specifies a position to be exposed by an electron beam on the fluorescent screen, reference numeral 66 designates one of stud pins, which fix the shadow mask 65 to an inner side of the skirt portion 59, and reference numeral 67 designates a button, by which the shadow mask 65 is grounded with external connection to prevent the shadow mask from being charged at a high potential by an electron beam.

The skirt portion 59 has a peripheral portion wound by an enforcing band to maintain strength against impact. The portion of the funnel 55 between the yoke portion 54 and the sealed portion 62 is called a funnel body portion 68. Reference numeral 69 designates a bulb axis, which connects the central axis of the neck portion and the center of the face portion 60.

The cathode ray tube 51 has an inner space maintained under a high vacuum since an electron beam is irradiated on the fluorescent screen to display an image. The region of the face portion for displaying an image is called a useful screen. The bulb 58 is formed in a non-spherical shape since the respective portions have different functions as stated earlier. The bulb 58, which is formed in an asymmetric shape unlike a spherical shape, is in an unstable and deformable state and has high tensile stresses generated on an outer surface since a load having a pressure of 1 atmosphere as the difference between the inner and outer pressures is applied to the outer surface of the bulb.

When a crack occurs in the bulb 58 under such a state, the crack expands to release high inherent deforming energy and spreads in the entire portion of the bulb 58, resulting in great breakage in some cases. In some cases, the bulb is in an inoperative state since the bulb gets fatigued and damaged by mutual effects between the moisture in air and the high tensile stresses.

Active development has been recently made for flat panel displays, such as plasma displays, liquid crystal displays and organic EL displays. On the other hand, attempts to increase a deflection angle to reduce the depth have been recently made for cathode ray tubes since the cathode ray tubes are said to be at a disadvantage in that the depth is great. The deflection angle is an angle, which is prescribed in the standard "EIAJ-ED-2134B" determined by Japan Electronics and Information Technology Industries Association (JEITA), and which means the angle connecting between the center of a reference line as an imaginary reference line and edges of a diagonal axis on the inner surface of the useful screen.

As an attempt to reduce the depth of a cathode ray tube, one of the inventors has proposed, in JP-A-2000-251766, a glass funnel for a cathode ray tube, which comprises a body portion having one end formed with a substantially rectangular open end portion, a yoke portion connected to the other end of the body portion, and a neck portion connected to an end of the yoke portion, which is configured such that a deflection unit for deflecting an electron beam emitted from an electron gun housed in the neck portion can be mounted on an outer side of the yoke portion, and which is characterized in that a portion of the body portion around the yoke portion is outwardly projected such that a front end of the yoke portion connected to the body portion is located at a position closer to the open end portion than a portion of the body portion farthest from the open end portion and that a concave portion is formed around the yoke portion by the outwardly projected portion of the body portion.

However, as the deflection angle becomes wider, the asymmetry of the bulb in shape is larger to increase tensile stresses generated on the outer surface of the bulb, which causes a problem that the probability of breakage is increased. Although a proposal to increase the thickness of glass has been provided as a solution of this problem, this proposal leads an increase in mass, which is another disadvantage for cathode ray tubes.

An attempt to temper glass by a chemical tempering method to avoid an increase in mass has been already made. As an example of the chemical tempering method, there is a method wherein strontium-barium-alkali-alumina-silicate glass containing about 5 to 8% of Na₂O and about 5 to 9% of K₂O is immersed in a molten liquid of KNO₃ at about 450°C. In the specification, this method is referred to as "the thermal diffusion type chemical tempering method".

The glass that is usually used for the funnel contains 60 mol% or more of SiO₂ as a main component. The glass also contains about 7 to 8.5 mol% of PbO in order to improve a property of absorbing an X-ray. From the viewpoints that the thermal expansion coefficients of the funnel and the panel are balanced and that a proper viscosity at a high temperature is ensured in consideration of the solubility and the moldability of glass, the glass contains alkali metal oxide, such as sodium and potassium.

The glass, which is used for the funnel, needs to have high electrical resistance in order to prevent dielectric breakdown from occurring during operation as a cathode ray tube. For this reason, the contents of the two components of sodium and potassium are adjusted so as to provide the glass with high electrical resistance by a mixed alkali effect. For example, the general composition of the glass used for the funnel is SiO₂-Al₂O₃-PbO-R₂O-R'O type glass (R₂O: alkali metal oxide, R'O: alkaline earth oxide).

In order to increase the electrical resistance of the glass of the funnel, attention should be paid to the content of alkali having a relatively smaller ionic radius, such as lithium ion, sodium ion or potassium ion, which has high mobility. Normally, the funnel does not need to contain lithium oxide as glass composition. Sodium oxide and potassium oxide are both contained as the glass composition at about 5 to 9% by mol percent, respectively.

When the sodium ion in the glass is replaced with potassium ion by the thermal diffusion type chemical tempering method, the mobility of the potassium ion is low since the contents of the sodium oxide and the potassium oxide have been adjusted. Even when the glass is immersed in a molten liquid of KNO₃ at about 450°C for 24 hours, the stress values in compressive stress layers are exponentially decreased in the thickness direction of the glass, i.e., from the glass surface toward the inside of the glass, though the stress values on the outermost surface of the glass are about 80 MPa.

As a result, the compressive stress value at a position having a depth of about 40 µm from the glass surface becomes about 0 PMa. This means that when the depth of damage created in a process for assembling a cathode ray tube is beyond the thickness of the compressive stress layers (about 40 µm), the strength reinforcing effect by the compressive stress layers is lost. Since a cathode ray tube, the inner space of which has been evacuated, has vacuum tensile stresses generated on a bulb surface, there is caused a problem in that the compressive stresses obtained by the chemical tempering method and the vacuum tensile stresses are cancelled to significantly reduce the thickness of the compressive stress layers. In the case of the thermal diffusion type chemical tempering method, since the funnel is immersed in a molten liquid, it is difficult to partially temper the funnel, though it is easy to temper the entire portion of the funnel.

There is an idea for a glass bulb for a cathode ray tube, wherein in order to solve the disadvantage of the thermal diffusion type chemical tempering method, the funnel is partially subjected to ion exchange to form compressive stress layers so as to locally improve the strength without increasing the mass of a cathode ray tube.

Since the surface of glass including a compressive stress layer formed by the chemical tempering method has several times more strength than the surface of normal glass, the entire strength of the bulb can be improved by concentrating the creation of deformation in tempered portions and restraining the creation of deformation in untempered portions.

However, as the deflection angle of the bulb increases, the funnel body portion is inevitably made smaller since the distance between the yoke portion and the sealed portion as the joint between the panel and the funnel is reduced. As a result, when high tensile stresses are generated in the funnel body portion, high tensile stresses are also generated in the sealed portion, being affected by the tensile stresses generated in the funnel body portion.

When bulbs, which have a diagonal diameter of 860 mm in the useful screen, have funnel body portions having the same thickness and have various kinds of deflection angles, have inner spaces evacuated, the maximum tensile stress σ_{VTmax} (MPa) generated in each of the funnel body portions and the maximum tensile stress σ_{VTSmax} (MPa) generated in each of the sealed portions are represented as shown in the graphical representations in Fig. 10. In Fig. 10, the solid line indicates the maximum tensile stress σ_{VTmax}(MPa) for each of the funnel body portions, and the chain double-dashed line indicates the maximum tensile stress σ_{VTSmax} (MPa) for each of the sealed portions.

In the case of the bulbs shown in Fig. 10, the permissible tensile stress for the funnel body portions is 8.5 MPa, and the permissible tensile stress for the sealed portions is 8 MPa. However, when the deflection angle is 120 deg or more, the maximum tensile stresses σ_{VTmax} (MPa) and σ_{VTSmax} (MPa) are both beyond the permissible tensile stress.

With respect to the funnel body portions, the maximum tensile stress σ_{VTmax} (MPa) can be made smaller than the permissible tensile stress by increasing the permissible tensile stress to about 100 MPa in accordance with the chemical tempering method of the idea stated earlier. However, the sealed portions cannot be tempered by the chemical tempering method since the sealed portions are different from the panels or the funnels in terms of the composition of solder glass. Although the idea stated earlier is an effective solution for the maximum tensile stress σ_{VTmax}caused in the funnel body portions, it has been difficult to reduce the maximum tensile stress σ_{VTSmax} caused in the sealed portions. From this viewpoint, there has been a demand to provide a significantly lighter tunnel than the conventional funnels.

The present invention is proposed in consideration of these problems. It is an object of the present invention to provide a funnel capable of producing a cathode ray tube, which is lightweight and safe and has a short depth by improving the strength of glass without increasing the mass and restraining an increase in deforming stresses caused on an outer surface.

In particular, it is an object of the present invention to provide a funnel capable of improving the entire strength by decreasing tensile stresses caused in a sealed portion and by concentrating the creation of deformation in a portion tempered by a chemical tempering method. It is another object of the present invention to provide a cathode ray tube with the funnel used therein.

In order to attain the objects, the present invention provides a glass funnel for a cathode ray tube, which comprises an open seal edge portion formed in a substantially rectangular shape, a cylindrical neck portion, a yoke portion for mounting a deflection yoke and a funnel body portion extending between the yoke portion and the seal edge portion, which forms a glass bulb for a cathode ray tube along with a glass panel, and which has a deflection angle of 120 deg or more; the funnel body portion having a concave portion formed around the yoke portion, the concave portion having a depth of 10 mm or more, the depth of the concave portion being a distance in a direction of a bulb axis between a point on an outer surface of the funnel body portion closest to the neck portion in the direction of the bulb axis and a point on an outer surface of the concave portion farthest from the neck portion in the direction of the bulb axis in a first funnel section, which is a cross-section containing the bulb axis and a point P_{S1} lying closest to the bulb axis and on the outer periphery of the seal edge portion; wherein a compressive stress layer is formed in a position where a tensile stress, which is generated on the outer surface of the funnel body portion when evacuating an inner space of the glass bulb for production of a cathode ray tube, takes a maximum value σ_{VTmax}, the compressive stress layer has a compressive stress value σ_{C} of 80 to 350 MPa, the compressive stress layer has a thickness of 60 µm or more, and the maximum value σ_{VTmax}is 10 to 100 MPa.

The passage "the funnel body portion having a concave portion formed around the yoke portion, the concave portion having a depth of 10 mm or more, the depth of the concave portion being a distance in a direction of a bulb axis between a point on an outer surface of the funnel body portion closest to the neck portion in the direction of the bulb axis and a point on an outer surface of the concave portion farthest from the neck portion in the direction of the bulb axis in a first funnel section, which is a cross-section containing the bulb axis and a point P_{S1} lying closest to the bulb axis and on the outer periphery of the seal edge portion" will be specifically explained as follows. When the point that lies on an outer periphery of the seal edge portion and closest to the bulb axis is defined as a long side center P_{S1} of the seal edge portion, and when a section taken on a plane containing the long side center P_{S1} and the bulb axis is defined as a first funnel section, the distance L_{C} in the direction of the bulb axis between a point P_{T1} on the outer surface of the funnel body portion closest to the neck portion in the direction of the bulb axis and a point P_{C1} on the outer surface of the concave portion farthest from the neck portion in the direction of the bulb axis is 10 mm or more in the first funnel section.

In the glass funnel according to the present invention, it is preferable that when a point on the outer surface of the funnel body portion, which is located at a position apart from the seal edge portion toward the neck portion by 30 mm in the direction of the bulb axis in the first funnel section, is defined as P_{B1}, a shortest distance from the point P_{B1} to the bulb axis is shorter than a shortest distance from the point P_{S1} to the bulb axis, and a straight line connecting between the points P_{S1} and P_{B1} and a straight line parallel with the bulb axis form an acute angle θ₁ of 1 to 7 deg therebetween.

More specifically, it is preferable that the funnel according to the present invention is configured so that when a point on the outer surface of the funnel body portion, which is located at a position apart from the seal edge portion toward the neck portion by 30 mm in the direction of the bulb axis in the first funnel section, is defined as a long side center P_{B1} of the funnel body portion, the shortest distance L_{S} from the long side center P_{S1} of the seal edge portion to the bulb axis and the shortest distance L_{B} from the long side center P_{B1} of the funnel body portion to the bulb axis satisfy the relationship of L_{S} > L_{B}, and that the straight line connecting between the long side center P_{S1} of the seal edge portion and the long side center P_{B1} of the funnel body portion and a line parallel with the bulb axis form an acute angle θ₁ of 1 to 7 deg therebetween.

In the glass funnel according to the present invention, it is preferable that when a point on the outer surface of the funnel body portion closest to the neck portion in a section containing the bulb axis and extending perpendicular to the first funnel section is defined as P_{T2}; when a point on the outer surface of the funnel body portion, which is located at a position apart from a point on an outer periphery of the seal edge portion and closer to the neck portion in the direction of the bulb axis, is defined as P_{B3}, the point on the outer periphery of the seal edge portion being locating in a section containing the point P_{T2} and extending parallel with the first funnel section; and when an acute angle, which is included between a straight line connecting between the points P_{S3} and P_{B3} and a straight line parallel with the bulb axis, is defined as θ₃, the angles θ₃ and θ₁ satisfy a relationship of |θ₁ - θ₃| ≤ 2 deg.

More specifically, it is preferable that the glass funnel is configured so that a section extending perpendicular to the first funnel section and containing the bulb axis is defined as a second funnel section, when a point on the outer surface of the funnel body portion closest to the neck portion in the direction of the bulb axis in the second funnel section is defined as P_{T2}, when a section containing the point P_{T2} and extending parallel with the first funnel section is referred to as a third funnel section, when a point on the outer surface of the funnel body portion, which is located at a position apart from the point Pₛ₃ toward the neck portion by 30 mm in the direction of the bulb axis in the third funnel section, is defined as P_{B3}, and when an angle formed between a straight line connecting the points P_{S3} and P_{B3} and a straight line parallel with the bulb axis is defined as θ₃, the angles θ₃ and θ₁ satisfy a relationship of |θ₁ - θ₃| ≤ 2 deg.

In the glass funnel according to the present invention, it is preferable that when points on the outer surface of the funnel body portion in the first funnel section, whose tangents form an angle of 70 deg with respect to the bulb axis, are defined as boundary points; when among the boundary points, a boundary point that is farthest from the bulb axis is defined as a first boundary point; when a boundary point, which is located between the first boundary point and the bulb axis and is closest to the first boundary point, is defined as a second boundary point; when a portion between the first boundary point and the second boundary point is defined as a roof portion; and when a straight line connecting between the first boundary point and the second boundary point is defined as an imaginary roof line; the roof. portion has an average curvature radius of 1000 mm or more, the imaginary roof line has a length of 20 to 100 mm, and the imaginary roof line and the bulb axis form an angle of 80 to 100 deg therebetween.

More specifically, it is preferable that the glass funnel according to the present invention is configured so that when points on the outer surface of the funnel body portion, whose tangents form an angle of 70 deg with respect to the bulb axis in the first funnel section, are defined as boundary points; when among the boundary points, a boundary point that is farthest from the bulb axis is defined as a first boundary point; when a boundary point, which is located between the first boundary point and the bulb axis and is closest to the first boundary point, is defined as a second boundary point; when a portion of the funnel body portion between the first boundary point and the second boundary point is defined as a roof portion; and when a straight line connecting between the first boundary point and the second boundary point is defined as an imaginary roof line; the roof portion has an average curvature radius of 1000 mm or more, the imaginary roof line has a length of 20 to 100 mm, and the imaginary roof line and the bulb axis form an angle of 80 to 100 deg therebetween.

Additionally, the present invention provides a cathode ray tube wherein a glass bulb comprises a glass funnel produced in any one of the modes stated earlier.

In drawings:
Fig. 1 is a schematic perspective view of a bulb using a funnel according to the present invention;
Fig. 2 is a schematic perspective view of the funnel according to the present invention;
Fig. 3 is a cross-sectional view of the funnel, taken along a first funnel section;
Fig. 4 is a plan view of the funnel;
Fig. 5 is an enlarged cross-sectional view of a seal edge portion in the funnel taken along the first funnel section;
Fig. 6 is a cross-sectional view of the funnel taken along a second funnel section;
Fig. 7 is a cross-sectional view of the funnel taken along a third funnel section;
Fig. 8 is an enlarged cross-sectional view of a concave portion and portions in the vicinity thereof in the funnel;
Fig. 9 is a schematic cross-sectional view of a conventional cathode ray tube; and
Fig. 10 is graphical representations showing the relationship of the maximum vacuum tensile stress and the deflection angle in conventional cathode ray tubes.

Now, an embodiment of the present invention will be described. In explanation below, the phrase "a panel" means a glass panel for a cathode ray tube, the phrase "a funnel" means a glass funnel for the cathode ray tube, and the phrase "a bulb" means a glass bulb for the cathode ray tube.

### Structure of Bulb

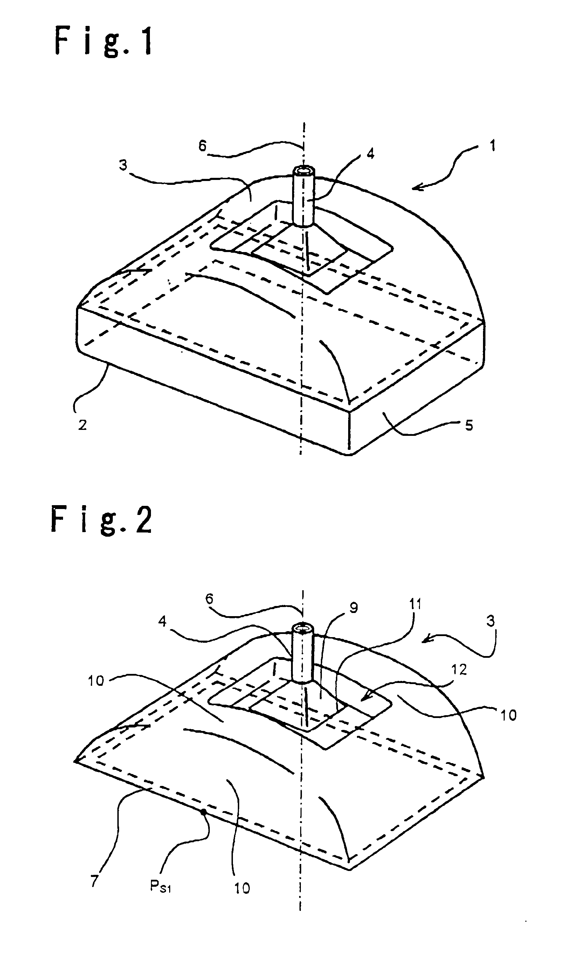

Fig. 1 is a schematic perspective view showing a bulb having a funnel according to the present invention. As shown in this figure, the bulb 1 comprises a panel 2 and a funnel 3 having a cylindrical neck portion 4. The funnel 3 has a deflection angle of 120 deg or more. The panel 2 includes a face portion for displaying an image (a bottom surface in the case wherein the bulb is put in the position shown in Fig. 1) , and a skirt portion 5 as a sidewall of the face portion. The neck portion 4 is formed in a cylindrical shape since an electron gun is housed there. Reference numeral 6 designates the bulb axis of the bulb 1, which connects between the central axis of the neck portion 4 and the central point of the face portion. The deflection angle is one that is prescribed in the standard "EIAJ-F-ED-2134B" determined by Japan Electronics and Information Technology Industries Association (JEITA), and that is defined by the angle connecting between the center of a reference line as an imaginary reference line and an effective edge of a diagonal axis on the inner side of the face portion. When the deflection angle is less than 120 deg, it is impossible to reduce the depth since the length of the bulb in a direction of the bulb axis increases. In other words, in the funnel according to the present invention, the deflection angle needs to be 120 deg or more. The direction of the bulb axis means a direction parallel with the axis.

### Structure of Funnel

Fig. 2 is a schematic perspective view showing only the funnel 3 in the bulb 1 shown in Fig. 1. The funnel 3 according to the present invention comprises an open seal edge portion 7 formed in a rectangular shape, a yoke portion 9 formed in a truncated cone shape or a truncated pyramid shape, including the cylindrical neck portion 4 and having a deflection yoke mounted thereon, and a funnel body portion 10 extending between the yoke portion 9 and the seal edge portion 7. The funnel 3 is sealed to the panel 2 at the seal edge portion 7.

The shape of the open seal edge portion is not limited to a rectangular shape strictly defined in a geometric sense, and the shape of the open seal edge portion may be one including curved corners or one including nonlinear long and/or short sides.

### Explanation of Concave Portion formed in Funnel

The funnel 3 according to the present invention has a concave portion 12 formed around the yoke portion 9 thereon such that a portion of the funnel body portion 10 closest to the neck portion 4 in the direction of the bulb axis 6, i.e., a highest portion of the funnel body portion 10 shown in Figs. 1 and 2, protrudes up to a position closer to the neck portion 4 around the entire periphery of the yoke portion 9 than a boundary 11 between the yoke portion 9 and the funnel body portion 10. Function of Concave Portion

Since the funnel 3 is formed so as to have the concave portion 12 around the yoke portion 9, the tensile stresses that are generated in the seal edge portion 7 having low strength and in the vicinity thereof are reduced, while the tensile stresses that are generated in the funnel body portion 10 are increased. In other words, the tensile stresses are intensively generated in the funnel body portion 10.

### First Funnel Section

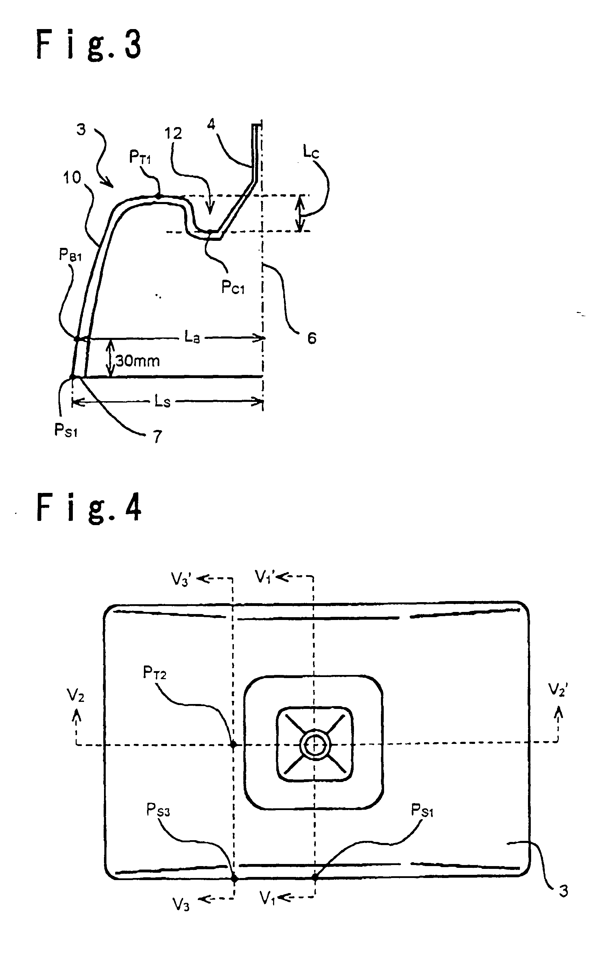

Fig. 3 is a cross-sectional view of the funnel 3 according to the present invention, wherein the funnel is shown, being cut along a first funnel section. Fig. 4 is a plan view of the funnel according to the present invention, wherein the funnel is viewed from the neck portion side in the direction of the bulb axis. The first funnel section means a section taken on a plane containing the long side center P_{S1} of the seal edge portion 7 (the position of P_{S1} being indicated in Fig. 2) and the bulb axis 6, wherein a point closest to the bulb axis 6 among points on the outer periphery of the seal edge portion 7 of the funnel 3 shown in Fig. 2 is defined as the long side center P_{S1} of the seal edge portion 7. Specifically, the first funnel section is a section taken along V₁ - V₁' in Fig. 4., which contains the minor axis of the funnel 3. Only a half part of the funnel is shown in Fig. 3 since the first funnel section is axisymmetric with respect to the bulb axis 6.

### Depth of Concave Portion: L_{C}

The funnel 3 according to the present invention is characterized in that a distance L_{C} in the direction of the bulb axis between a point P_{T1} on the funnel body portion 10 closest to the neck portion 4 in the direction of the bulb axis and a point P_{C1} on an outer surface of the concave portion 12 farthest from the neck portion 4 in the direction of the bulb axis is 10 mm or more in the first funnel section. The distance L_{C} does not mean the distance in a straight line, which connects between the point P_{T1} and the point P_{C1}. The distance L_{C} means the distance between the point P_{T1} and the point P_{C1} in the direction of the bulb axis, which is indicated by L_{C} in Fig. 3. Now, the distance L_{C} is referred to as "the concave portion depth L_{C}".

As stated earlier, by forming the funnel 3 so as to have the concave portion 12 around the yoke portion 9, the tensile stresses that are generated in the seal edge portion 7 having low strength and in the vicinity thereof are reduced, while the tensile stresses that are generated in the funnel body portion 10 are increased. This effect is further enhanced by setting the concave portion depth L_{C} at a value of 10 mm or more. Since the funnel 3 according to the present invention is produced by press molding, it is more preferable from the viewpoint of easy molding in pressing molten glass gob by a mold that the concave portion depth L_{C} is 30 mm or less. Maximum Vacuum Tensile Stress and Strengthened Compressive Stress

The bulb 1 with the funnel 3 according to the present invention is characterized in that the tensile stresses that are generated on an outer surface of the funnel body portion 10 by evacuating the inner space of the bulb for production of a cathode ray tube have the maximum value σ_{VTmax} of 10 to 100 MPa, a compressive stress layer is formed in at least a position where the maximum value σ_{VTmax} is generated, the compressive stress value σ_{c} in the compressive stress layer is 30 to 350 MPa, and the compressive stress layer has a depth of 60 µm or more.

As stated earlier, by setting the concave portion depth L_{C} at 10 mm or more, the tensile stresses that are generated in the seal edge portion 7 and in the vicinity thereof are reduced, while the tensile stresses that are generated in the funnel body portion 10 are increased. In other words, the tensile stresses generated in the bulb 1 can be collected in the funnel body portion 10. Specifically, the tensile stresses that are generated on an outer surface of the funnel body portion 10 by evacuating the inner space of the bulb 1 have the maximum value σ_{VTmax} of 10 to 100 MPa.

In explanation below, the tensile stresses that are generated by evacuating the inner space of the bulb are referred to as "the vacuum tensile stresses", and the maximum value σ_{VTmax} that is generated on the outer surface of the funnel body portion 10 is also referred to as "the maximum tensile stress σ_{VTmax}".

As stated earlier, the permissible tensile stress value for the funnel body portions 10 is at least 8.5 MPa even in a case wherein normal materials are used to produce a funnel having a conventional shape. When the maximum tensile stress σ_{VTmax} is less than 10 MPa, the effect offered by chemical enhancement does not work in satisfactory fashion since the difference between the maximum tensile stress and the permissible tensile stress value is less than 1.5 MPa.

When the maximum tensile stress σ_{VTmax} is beyond 100 MPa, it is impossible to obtain a homogeneous product since the maximum tensile stress σ_{VTmax} is significantly changed by a minor error in the shape and the thickness of the funnel. From this viewpoint, the maximum tensile stress σ_{VTmax}, which is generated on an outer surface of the funnel body portion 10 by evacuating the inner space of the glass bulb when a cathode ray tube is produced of the funnel according to the present invention, is required to be 10 to 100 MPa. It is preferable from the viewpoint of a decrease in the mass of the funnel that the maximum tensile stress σ_{VTmax} is 13 to 100 MPa. It is most preferable from the viewpoint of productivity in a chemical tempering process that the maximum tensile stress σ_{VTmax} is 13 to 40 MPa.

In the funnel body portion 10, the compressive stress layer is formed in at least a position where the maximum vacuum stress value σ_{VTmax} is generated, the compressive stress value σ_{c} in the compressive stress layer is 80 to 350 MPa, and the compressive stress layer formed at a portion with the maximum vacuum stress value σ_{VTmax} generated therein has a depth of 60 µm or more. When the compressive stress value σ_{C} is less than 80 MPa, there is a danger that fracture is caused so as to begin at the funnel body portion by, e.g., mechanical impact. When the compressive stress value σ_{C} beyond 350 MPa, the compressive stress layer peels off and is divided into minute pieces when the panel is broken. In the latter case, the possibility of creating a dangerous situation is increased, and various problems are caused in production. From these viewpoints, the compressive stress value σ_{C} is set at 80 to 350 MPa. Formation of Compressive Stress Layer

In order to form a compressive stress layer in glass, there have been widely known a thermal tempering method and a chemical tempering method. The thermal tempering method is a method wherein a compressive stress is left on a surface by quenching molten glass gob after press molding. The chemical tempering method is a method wherein a compressive stress layer is formed on a surface by an increase in volume, which is caused by replacing specific alkali ions in glass (hereinbelow, referred to as "the ions in glass") by implanted ions having a larger ion diameter than the ions in glass (hereinbelow, referred to as "larger diameter ions") at a temperature of not higher than the distortion temperature.

However, the thermal tempering method is not suited for production of the funnel according to the present invention since it is difficult to apply a compressive stress value σ_{C} of 80 MPa or more. On the other hand, the chemical tempering method is more suited for production of the funnel according to the present invention than the thermal tempering method since it is easy to have a compressive stress value σ_{C} of less than about 350 MPa, and since it is possible to avoid the creation of an unnecessary tensile stress. Chemical Strengthening Method: Chemical Strengthening Method assisted by an Electric Field

However, various kinds of problems are involved in the thermal diffusion type chemical tempering method as an example of the chemical tempering method as stated earlier. A chemical tempering method wherein ions are exchanged with an electric field applied (hereinbelow, referred as to "the chemical tempering method assisted by an electric field") has been known as a chemical tempering method other than the thermal diffusion type chemical tempering method.

This method is disclosed in JP-A-2001-302278. Specifically, this is a method wherein glass is immersed in a molten liquid of potassium nitrate, a molten liquid of sodium nitrate or a mixture thereof, an anode is provided in a part of the molten liquid with a glass front surface to be subjected to ion exchange immersed therein, a cathode is provided in a part of the molten liquid with the glass rear surface immersed therein, and a d.c. voltage is applied to make ion exchange at a temperature of not higher than the distortion temperature.

The feature of the chemical tempering method assisted by an electric field is that by applying an electric filed to increase the mobility of larger diameter ions, the larger diameter ions can be effectively replaced by the ions in glass to have a sufficient compressive stress value and provide a compressive stress layer with a sufficient depth (thickness) in a short period of time.

### Chemical Strengthening Method: Chemical Strengthening Method using Paste and assisted by an Electric Field

There is a chemical tempering method using paste and assisted by an electric field as a more specific mode of the chemical tempering method assisted by an electric field. The chemical tempering method using paste and assisted by an electric field is a method wherein paste, which is prepared by mixing salt containing larger diameter ions, clay and water, is applied on glass, and the glass is subjected to ion exchange by being heated to a temperature, at which the salt is melted. By the chemical tempering method using paste and assisted by an electric field, only a portion of glass with paste applied thereon can be chemically tempered. From this viewpoint, this method is adequate to temper only a limited region of a glass product (hereinbelow, referred to as "the partial enhancement").

### Inclination of Funnel Body Portion in First Funnel Section

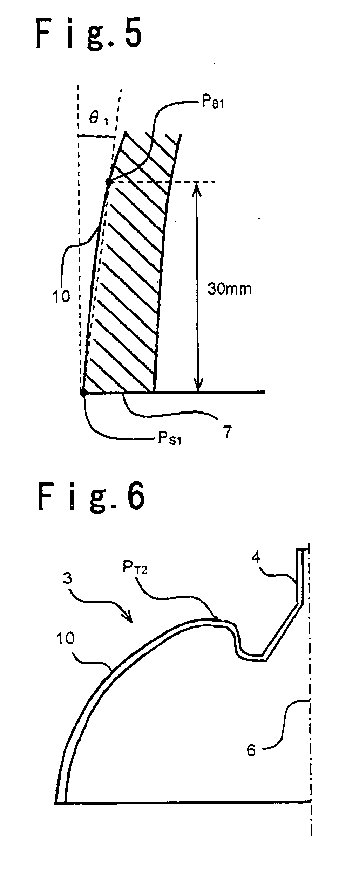

Fig. 5 is a cross-sectional view of the funnel body portion showing a long side center P_{B1} of the funnel body portion and portions in the vicinity thereof. The long side center P_{B1} means a point on the outer surface of the funnel body portion 10, which is located at a position apart from the seal edge portion toward the neck portion by 30 mm in the direction of the bulb axis in the first funnel section.

In the funnel 3 according to the present invention, it is preferable that the shortest distance L_{S} from the long side center P_{S1} of the seal edge portion to the bulb axis and the shortest distance L_{B} from the long side center P_{B1} of the funnel body portion to the bulb axis satisfy the relationship of L_{S} > L_{B}, and that the line connecting between the long side center P_{S1} of the seal edge portion and the long side center P_{B1} of the funnel body portion and a line extending parallel with the bulb axis and passing through the long side center P_{S1} of the seal edge portion form an acute angle θ₁ of 1 to 7 deg therebetween (see Fig. 5).

The shortest distance L_{S} from the long side center P_{S1} of the seal edge portion to the bulb axis means the length of the straight line that connects between the long side center P_{S1} of the seal edge portion and the bulb axis 6 and is perpendicular to the bulb axis 6. Likewise, the shortest distance L_{B} from the long side center P_{B1} of the funnel body portion to the bulb axis means the length of the straight line that connects between the long side center P_{B1} of funnel body portion and the bulb axis 6 and is perpendicular to the bulb axis 6.

From the viewpoint of productivity, it is not preferable that the acute angle θ₁ is less than 1 deg. This is because the so-called "draft angle", which means an inclination required for easy release of the funnel 3 from a mold after press molding, becomes insufficient. On the other hand, when the acute angle θ₁ is 1 to 7 deg, the vacuum tensile stresses generated in the seal edge portion 7 can be reduced, and the vacuum tensile stresses generated in the funnel body portion 10 can be increased. In other words, it is possible to concentrate the generation of the vacuum tensile stresses in the funnel body portion 10.

Additionally, the funnel body portion 10 and the skirt portion 5 of the panel 2 form a continuous and substantially flat surface. When the inner space of the cathode ray tube is evacuated, forces are applied so as to squeeze the seal edge portion 7 inwardly (in a direction approaching to the bulb axis) to generate compressive stress components on an outer surface of the seal edge portion 7. As a result, the vacuum tensile stresses generated in the seal edge portion 7 can be decreased accordingly.

On the other hand, the forces that tend to deform the seal edge portion 7 inwardly, i.e., the forces that generate the compressive stress components, are suppressed by counter forces applied by the funnel body portion 10, i.e., forces that generate the tensile stress components. As a result, the vacuum tensile stresses in the funnel body portion 10 are further increased.

By forming the funnel body portion 10 in the shape stated earlier, it is possible to reduce the vacuum tensile stresses generated in the seal edge portion 7 and to increase the vacuum tensile stresses generated in the funnel body portion 10. In other words, it is possible to concentrate the generation of the vacuum tensile stresses in the funnel body portion 10.

### Inclination of Funnel Body Portion in Third Funnel Section

With respect to the funnel 3, the cross-section that is perpendicular to the first funnel section and contains the bulb axis is referred to as a second funnel section. Specifically, the second funnel section is a section taken along V₂ - V₂' in Fig. 4., which contains the major axis of the funnel 3. The second funnel section is shown in Fig. 6. In Fig. 6, only a half part of the funnel is shown since the second funnel section is axisymmetric with respect to the bulb axis.

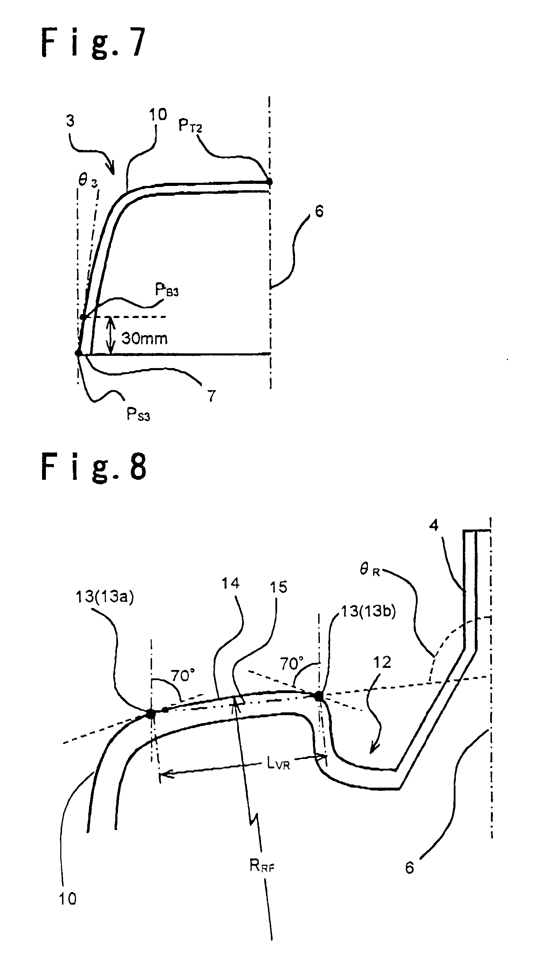

As shown in Fig. 6, a point on the outer surface of the funnel body portion, which is located at the position closest to the neck portion 4 in the direction of the bulb axis in the second funnel section, is referred to P_{T2}. The section that contains the point P_{T2} and is parallel with the first funnel section is referred to as a third funnel section. Specifically, the third funnel section is a section taken along V₃ - V₃' in Fig. 4. The third funnel section is shown in Fig. 7. In Fig. 7, only a half part of the funnel is shown since the third funnel section is also axisymmetric with respect to the bulb axis as in the first funnel section and the second funnel section.

In the third funnel section shown in Fig. 7, a point on the outer periphery of the seal edge portion 7 is referred to as P_{S3}, a point on the outer surface of the funnel body portion 10, which is located at a position closer to the neck portion 4 in the bulb axis by 30 mm, is referred to as P_{S3}, and the angle that is formed between the straight line connecting the points P_{S3} and P_{B3} and a straight line passing through the point P_{S3} and extending parallel with the bulb axis 6 is referred to as θ₃. In the funnel 3 according to the present invention, it is preferable that the angles θ₃ and θ₁ satisfy the relationship of |θ₁ - θ₃| ≤ 2 deg.

Since the funnel 3 according to the present invention, which has the concave portion formed around the yoke portion 9, has high rigidity particularly around the yoke portion 9, a high vacuum tensile stress is generated at the point P_{S3} on the outer periphery of the seal edge portion 7 in the third funnel section in some cases. However, by forming the funnel so as to set |θ₁ - θ₃| at a value of 2 deg or less, i.e., decreasing the difference between the inclination of the funnel body portion 10 in the first funnel section and the inclination of the funnel body portion 10 in the third funnel section, the generated forces can be dispersed to suppress the high vacuum tensile stresses generated at the point P_{S3} and in the vicinity of this point.

With respect to the angle θ₃, inclinations that a portion of the funnel closer to the neck portion becomes closer to the bulb axis are indicated by positive (+) values. On the other hand, inclinations that a portion of the funnel closer to the neck portion becomes farther from the bulb axis are indicated by negative (-) values.

### Roof Portion in Funnel Body Portion

Fig. 8 is an enlarged cross-sectional view showing the concave portion 12 of the funnel body portion 10 and portions in the vicinity of the concave portion in the first funnel section. As shown in Fig. 8, points on the outer surface of the funnel body portion 10, whose tangents form an angle of 70 deg with respect to the bulb axis, are referred to boundary points 13 in the present invention. Among the boundary points, the boundary point that is farthest from the bulb axis is referred to as a first boundary point 13a, and the boundary point that is located between the first boundary point 13a and the bulb axis 6 and is closest to the first boundary point 13a is referred to as a second boundary point 13b.

In the funnel body portion 10 in the first funnel section, a portion of the funnel body portion that extends between the first boundary point 13a and the second boundary point 13b is defined as a roof portion 14, and the straight line that connects between the first boundary point 13a and the second boundary point 13b is defined as an imaginary roof line 15. In the funnel 3 according to the present invention, it is preferable that the roof portion has an average curvature radius R_{RF} of 1000 mm or more, the imaginary roof line has a length L_{VR} of 20 to 100 mm, and the imaginary roof line and the bulb axis forms an angle θ_{R} of 80 to 100 deg.

Setting the average curvature radius of the roof portion 14 at 1000 mm or more, and setting the angle θ_{R} between the imaginary roof line 15 and the bulb axis 6 at 80 to 100 deg mean that the roof portion 14, which is a region of the funnel body portion 10 closest to the neck portion 4, is made as a substantially flat surface extending substantially perpendicular to the bulb axis. When these conditions are met, the rigidity of the roof portion 14 can be improved, and the compressive stress components generated in the seal edge portion 7 can be increased, further reducing the vacuum tensile stresses generated in the seal edge portion 7.

When the length L_{VR} of the imaginary roof line is less than 20 mm, productivity is lowered since the flow of the molten glass gob is retarded between an upper mold half (plunger) and a lower mold half (bottom mold) during press molding. On the other hand, when the length L_{VR} of the imaginary roof line is beyond 100 mm, the rigidity of the roof portion 14 is reduced. From these viewpoints, it is preferable that the length L_{VR} is 20 to 100 mm.

This is the explanation of the funnel according to the present invention. By using the funnel according to the present invention to produce a bulb along with a panel for production of a cathode ray tube, it is possible to provide a cathode ray tube, which has a short depth (length in the direction of the bulb axis) and a small mass.

### Example

Now, the present invention will be further described based on the bulbs in examples and comparative examples shown as Examples 1 to 7. Each of the bulbs has a panel, a funnel and a neck portion made of glass materials manufactured by Asahi Glass Company, Limited, which have properties shown in Table 1. The design values common to the respective bulbs are shown in Table 2.

**Table 1**

| | Panel | Funnel (except neck portion) | Neck portion |
|---|---|---|---|
| Name (trade name) | 5008 | 0138 | 0150 |
| Density (g/cm³) | 2.79 | 3.00 | 3.29 |
| Young's modulus | 75 | 69 | 62 |
| Poisson's ratio | 0.21 | 0.21 | 0.23 |
| Softening temperature (°C) | 703 | 663 | 643 |
| Annealing temperature (°C) | 521 | 491 | 466 |
| Distortion temperature (°C) | 477 | 453 | 428 |

**Table 2**

| | |
|---|---|
| Aspect ratio of useful screen | 16:9 |
| Diagonal diameter of useful screen | 760 mm |
| Maximum outer diameter of panel | 814.8 mm |
| Average curvature radius of outer surface of face portion | 50000 mm |
| Deflection angle of funnel | 135° |
| Outer diameter of neck portion | 29.1 mm |
| Depth of bulb (maximum length in direction of bulb axis) | 340.0 mm |

Examples 1 to 3 are examples, and Examples 4 to 7 are comparative examples. When numerical analysis is made in accordance with the finite element method co find where the maximum vacuum tensile stresses are generated and how much the values of the maximum vacuum tensile stresses (unit: MPa) are with respect to the respective bulbs in the examples and the comparative examples, it is shown that the maximum vacuum tensile stresses are generated on the long sides of the respective funnel body portions. In the case of each of the bulbs in Examples 1 to 3 and Examples 6 and 7, in accordance with the chemical tempering method using paste and assisted by an electric field stated earlier, the compressive stress layers are formed in the positions where the maximum vacuum tensile stresses are generated.

Now, the chemical tempering method using paste and assisted by an electric field in Examples and Comparative Examples will be explained. The salt to be contained in the paste is prepared by pulverizing potassium nitride as a reagent into powder having an average particle size of about 5 µm by a mortar. The clay is prepared from kaolin having an average particle size of about 2 µm. The potassium nitride powder and the kaolin clay are mixed with a ratio of potassium nitride to kaolin = 65 : 35.

A solvent is added to a mixture of the potassium nitride powder and the kaolin clay so that the paste has a viscosity of about 200 Pa·s. The solvent is a liquid of propylene glycol having room temperature. When the paste thus prepared is used to temper the funnel glass in each of Examples 1 to 3 and 6, these examples are performed under the conditions of a temperature of 450°C, an applied voltage of 300 V, a quantity of electricity of 9 C/cm² and an electric field application period of about 90 min.

Next, how to measure the stress values and the thickness of the compressive stress layers thus formed by the chemical tempering method will be explained. As one of the methods for measuring the stress value of glass, there is one wherein the measurement is made by using the phenomenon that the difference between refractive indexes in the direction of principal stresses generated by applying a force to glass is proportional to the difference between the stresses. When linear polarized light passes through glass with a force applied thereto, the transmitted light includes polarized surfaces formed perpendicular to each other with respect to the respective principal stresses and is decomposed into component waves having different speeds.

One of the decomposed component waves is delayed in comparison with the other decomposed component wave after having passed through the glass. The glass has different refractive indexes in the directions of the principal stresses, depending on the speeds of the component waves. Since the difference between stresses generated in glass is proportional to the difference between the refractive indexes, i.e., the so-called double refraction, a stress value can be measured based on the phase difference between component waves. The stress value is measured by passing light through glass having residual stresses and using a polarization microscope to measure the phase difference between decomposed component waves vibrating in the direction of principal stresses after transmission.

In the measurement, a polarizer is provided in a light path, through which light proceeds before passing through the glass. A phase retarder and an analyzer for detecting polarized light are provided in a light path, through which the light proceeds after passing through the glass. Examples of the phase retarder (phase retardation plate) are a Berek compensator, a Babinet compensator and a quarter-wave retardation plate. Since any one of these retardation plates can be used to produce a dark line so that the phase difference in a region to be measured is brought to zero, a stress value can be found based on the amount of retardation in the compensator. In the examples and the comparative examples according to the present invention, a Berek compensator is used as the phase retardation plate.

Instead of using any one of the compensators, a sensitive tint plate, which has an optical path difference of about 565 nm and changes an interference color in response to a change in a slight optical path difference of about 565 nm, may be used to produce interference color in response to the phase difference due to slight double refraction, which is generated after the light has passed through the glass. Thus, it is possible to identify the level of a stress based on the interference color. By using this phenomenon, the cross-section of the glass is observed to measure the thickness of a stress layer.

Next, the respective bulbs in Example 1 to Example 6 will be explained. The thickness of the funnel body portion and the thickness of the seal edge portion of the funnel in each of the examples are reduced as much as possible, provided that the condition that the maximum vacuum tensile stress in each of the funnel body portion and the seal edge portion is less than a permissible vacuum tensile stress.

### EXAMPLE 1

The funnel of the bulb in Example 1 has a concave portion formed in the funnel body portion around the yoke portion so as to have a depth L_{C} of 18.0 mm in the first funnel section. The inclination angle θ₁ of a portion of the funnel body portion close to the seal edge portion in the first funnel section is 8 deg, and the inclination angle θ₃ of a portion of the funnel body portion close to the seal edge portion in the third funnel section is 11 deg. The average curvature radius R_{RF} of the roof portion of the funnel body portion is 120 mm.

The maximum tensile stress σ_{VTmax} that is generated in the funnel body portion is 13.7 MPa. By the chemical tempering method using paste and assisted by an electric field, a compressive stress layer is formed at a position with the maximum tensile stress σ_{VTmax} generated therein. At the position with the maximum tensile stress σ_{VTmax} generated therein, the compressive stress layer has a stress value σ_{C} of 200 MPa, and the thickness of the compressive stress layer is 75 µm.

### EXAMPLE 2

The funnel of the bulb in Example 2 has a concave portion formed in the funnel body portion around the yoke portion so as to have a depth L_{C} of 22.0 mm in the first funnel section. The inclination angle θ₁ of a portion of the funnel body portion close to the seal edge portion in the first funnel section is 3 deg, and the inclination angle θ₃ of a portion of the funnel body portion close to the seal edge portion in the third funnel section is 3 deg. The average curvature radius R_{RF} of the roof portion of the funnel body portion is 110 mm.

The maximum tensile stress σ_{VTmax} that is generated in the funnel body portion is 14.1 MPa. By the chemical tempering method using paste and assisted by an electric field, a compressive stress layer is formed at a position with the maximum tensile stress σ_{VTmax} generated therein. At the position with the maximum tensile stress σ_{VTmax} generated therein, the compressive stress layer has a stress value σ_{C} of 120 MPa, and the thickness of the compressive stress layer is 60 µm.

### EXAMPLE 3

The funnel of the bulb in Example 3 has a concave portion formed in the funnel body portion around the yoke portion so as to have a depth L_{C} of 17.0 mm in the first funnel section. As in the funnel in Example 2, the inclination angle θ₁ of a portion of the funnel body portion close to the seal edge portion in the first funnel section is 3 deg, and the inclination angle θ₃ of a portion of the funnel body portion close to the seal edge portion in the third funnel section is 3 deg. The average curvature radius R_{RF} of the roof portion of the funnel body portion is 1500 mm. At this time, the imaginary roof line of the funnel body portion has a length L_{VR} of 35 mm.

The maximum tensile stress σ_{VTmax} that is generated in the funnel body portion is 15.2 MPa. By the chemical tempering method using paste and assisted by an electric field, a compressive stress layer is formed at a position with the maximum tensile stress σ_{VTmax} generated therein. At the position with the maximum tensile stress σ_{VTmax} generated therein, f the compressive stress layer has a stress value σ_{c} of 80 MPa, and the thickness of the compressive stress layer is 65 µm. EXAMPLE 4 as a Comparative Example

The bulb in Example 4 includes a funnel produced in accordance with a conventional technique. In other words, no concave portion is formed in the funnel body portion around the yoke portion. The maximum tensile stress σ_{VTmax} that is generated in the funnel body portion is 7.8 MPa. However, the funnel body needs to be made thicker since no glass tempering treatment is applied. Since the thickness of the funnel body portion is increased, the mass of the bulb is 60.4 Kg. The other comparative examples stated later will be explained, being compared to Example 4 as the reference. EXAMPLE 5 as a Comparative Example

The bulb in Example 5 includes a funnel produced as disclosed in JP-A-2000-251766. Specifically, the bulb has a concave portion formed in the funnel body portion around the yoke portion so as to have a depth L_{C} of 30.0 mm in the first funnel section. As in the funnel in Example 2, the inclination angle θ₁ of a portion of the funnel body portion close to the seal edge portion in the first funnel section is 3 deg, and the inclination angle θ₃ of a portion of the funnel body portion close to the seal edge portion in the third funnel section is 3 deg. The average curvature radius R_{RF} of the roof portion of the funnel body portion is 120 mm.

The maximum tensile stress σ_{VTmax} that is generated in the funnel body portion is 7.8 MPa. In this comparative example, no glass tempering treatment is applied.

### EXAMPLE 6 as a Comparative Example

The bulb in Example 6 includes a funnel produced as proposed in the idea discussed in the introduction part. In other words, the funnel boy portion is literally funneled since the funnel body portion has no concave portion formed in around the yoke portion. The maximum tensile stress σ_{VTmax} that is generated in the funnel body portion is 10.5 MPa. By the chemical tempering method using paste and assisted by an electric field, a compressive stress layer is formed at a position with the maximum tensile stress σ_{VTmax} generated therein. At the position with the maximum tensile stress σ_{VTmax} generated therein, the compressive stress layer has a stress value σ_{c} of 80 MPa, and the thickness of the compressive stress layer is 60 µm.

### EXAMPLE 7 as a Comparative Example

In the bulb in Example 7, the funnel body portion has a funnel formed therein. By the chemical tempering method using paste and assisted by an electric field, a compressive stress layer is formed at a position of the funnel body portion with the maximum tensile stress σ_{VTmax} generated therein. In other words, the bulb has a combination of the idea discussed in the introduction part and the proposal disclosed in JP-A-2000-25176 applied thereto. The concave portion has a depth L_{C} of 5.0 mm in the first funnel section. The inclination angle θ₁ of a portion of the funnel body portion close to a seal edge portion in the first funnel section is 8 deg, and the inclination angle θ₃ of a portion of the funnel body portion close to the seal edge portion in the third funnel section is 11 deg. The average curvature radius R_{RF} of the roof portion of the funnel body portion is 120 mm.

The maximum tensile stress σ_{VTmax} that is generated in the funnel body portion is 12.2 MPa. The compressive stress layer that is formed at a position with the maximum tensile stress σ_{VTmax} generated therein has a stress value σ_{C} of 200 MPa, and the thickness of the compressive stress layer is 75 µm.

The measured values for the respective bulbs in the examples and the comparative examples produced as stated earlier are listed in Table 3. The symbols in Table 3 are as follows:
Symbol "L_{C}" is the depth of the concave portion of a funnel in the first funnel section (unit: mm).
Symbol "θ₁" is the acute angle included between the straight line connecting the long side center P_{S1} of the seal edge portion of a funnel with the long side center P_{B1} of the funnel body portion and the straight line extending parallel with the bulb axis, i.e., the inclination of the funnel body portion in the first funnel section (unit: deg).
Symbol "θ₃" is the acute angle included between the straight line connecting the points P_{S3} and P_{B3} in the third funnel section of a funnel and the straight line extending parallel with the bulb axis, i.e., the inclination of the funnel body portion in the third funnel section (unit: deg).
Symbol "R_{RF}" is the average curvature radius of the roof portion of a funnel in the first funnel section (unit: mm).
Symbol "L_{VR}" is the length of imaginary roof portion of a funnel in the first funnel section (unit: mm).
Symbol "T_{SE}" is the thickness of the seal edge portion of a funnel (unit: mm).
Symbol "T_{FC}" is the thickness at the center of the face portion of a panel (unit: mm).
Symbol "σ_{AVT}" is the permissible vacuum tensile stress in the funnel body portion of a funnel (unit: MPa).
Symbol "σ_{AVTS}" is the permissible vacuum tensile stress in the sealed portion of a bulb, i.e., the seal edge portion of a funnel (unit: MPa).
Symbol "σ_{VTmax}" is the maximum vacuum tensile stress generated in the funnel body portion of a funnel (unit: MPa).
Symbol "σ_{AVTSmax}" is the maximum vacuum tensile stress in the sealed portion of a bulb, i.e., the seal edge portion of a funnel (unit: MPa).
Symbol "σ_{C}" is the value of the compressive stress applied to a position with the maximum vacuum tensile stress σ_{VTmax} generated therein (unit: MPa) .
Symbol "T_{CSL}" is the thickness of the compressive stress layer at a position with the maximum vacuum tensile stress σ_{VTmax} generated therein (unit: µm).
Symbol "m_{B}" is the mass of a bulb (unit: kg).
Symbol "m_{R}" is the mass ratio of each of the bulbs when the mass of the bulb in Example 4 is defined as 100.0% (unit: %).

**Table 3**

| | Unit | Ex. 1 | Ex. 2 | Ex. 3 | Ex. 4 | Ex. 5 | Ex. 6 | Ex. 7 |
|---|---|---|---|---|---|---|---|---|
| L_{C} | mm | 18.0 | 22.0 | 17.0 | - | 30.0 | - | 5.0 |
| θ₁ | ° | 8 | 3 | 3 | 3 | 3 | 3 | 8 |
| θ₃ | ° | 11 | 3 | 3 | - | 3 | - | 11 |
| \|θ₁-θ₃\| | ° | 3 | 0 | 0 | - | 0 | - | 3 |
| R_{R}^{f} | mm | 120 | 110 | 1500 | - | 120 | - | 120 |
| L_{VR} | mm | - | - | 35 | - | - | - | - |
| T_{SE} | mm | 13.5 | 12.0 | 12.0 | 25.0 | 20.0 | 22.0 | 15.0 |
| T_{FC} | mm | 20.0 | 20.0 | 19.5 | 27.0 | 24.5 | 26.0 | 22.5 |
| σ_{AVT} | MPa | 80.0 | 48.0 | 32.0 | 8.5 | 8.5 | 32.0 | 80.0 |
| σ_{AVTS} | MPa | 8. 0 | 8.0 | 8. 0 | 8. 0 | 8 . 0 | 8. 0 | 8.0 |
| σ_{VTmax} | MPa | 13.7 | 14.1 | 15.2 | 7.8 | 7.8 | 10.5 | 12.2 |
| σ_{AVTmax} | MPa | 7.6 | 7.9 | 7.8 | 8.1 | 7.9 | 7.9 | 7 . 6 |
| σ_{C} | MPa | 200 | 120 | 80 | - | - | 80 | 200 |
| T_{CSL} | µm | 75 | 60 | 65 | - | - | 60 | 75 |
| m_{B} | kg | 42.7 | 40.5 | 39.4 | 60.4 | 50.1 | 52.0 | 45.6 |
| m_{R} | % | 70.7 | 67.1 | 65.2 | 100.0 | 82.9 | 86.1 | 75.5 |

As seen from the list above, the bulb in Example 5, the depth of which is reduced in accordance with the solution disclosed in JP-A-2000-251766, achieves a reduction in mass only by 17.1% in comparison with the bulb in Example 4. The bulb in Example 6, the funnel body portion of which is tempered in accordance with the idea stated in the introduction part, achieves a reduction in mass only by about 13.9% in comparison with the bulb in Example 4. The bulb in Example 7, to which a combination of the solution disclosed in JP-A-2000-251766 and the idea stated in the introduction part is applied, achieves a reduction in mass only by about 24.5% in comparison with the bulb in Example 4.

On the other hand, the bulbs in Examples 1 to 3, each of which uses the funnel according to the present invention, can achieve a reduction in mass by 29% or more. In particular, the bulbs in Example 2 and Example 3, each of which has a portion of the funnel body portion close to the seal edge portion formed parallel with the bulb axis, can achieve a reduction in mass by 32.9% and by 34.8%, respectively. This reveals that the funnel according to the present invention can provide a quite lightweight cathode ray tube in comparison with the funnel according to a conventional technique or a combination of a conventional technique and the idea stated in the introduction part.

The funnel according to the present invention can reduce the depth without increasing the mass of the cathode ray tube since the funnel has a deflection angle of 120 deg or more and can achieve a significant reduction in mass in comparison with the funnel according to a conventional technique. The funnel according to the present invention is quite safe since breakage due to insufficient strength can be avoided by forming the compressive stress layer in each of positions where the maximum vacuum tensile stress is generated.

The entire disclosure of Japanese Patent Application No. 2002-227527 filed on August 5, 2002 including specification, claims, drawings and summary is incorporated herein by reference in its entirety.

## Claims

1. A glass funnel for a cathode ray tube, which comprises an open seal edge portion (7) formed in a substantially rectangular shape, a cylindrical neck portion (4), a yoke portion (9) for mounting a deflection yoke and a funnel body portion (10) extending between the yoke portion (9) and the seal edge portion (7), which forms a glass bulb (1) for a cathode ray tube along with a glass panel (2), and which has a deflection angle of 120 deg or more;
the funnel body portion (10) having a concave portion (12) formed around the yoke portion (9), the concave portion (12) having a depth of 10 mm or more, the depth of the concave portion being a distance in a direction of a bulb axis (6) between a point on an outer surface of the funnel body portion (10) closest to the neck portion (4) in the direction of the bulb axis (6) and a point on an outer surface of the concave portion (12) farthest from the neck portion (4) in the direction of the bulb axis (6) in a first funnel section, which is a cross-section containing the bulb axis (6) and a point P_{S1} lying closest to the bulb axis (6) and on the outer periphery of the seal edge portion (7);
wherein a compressive stress layer is formed in a position where a tensile stress, which is generated on the outer surface of the funnel body portion (10) when evacuating an inner space of the glass bulb for production of a cathode ray tube, takes a maximum value σ_{VTmax},the compressive stress layer has a compressive stress value σ_{C} of 80 to 350 MPa, the compressive stress layer has a thickness of 60 µm or more, and the maximum value σ_{VTmax} is 10 to 100 MPa.

2. The glass funnel according to Claim 1, wherein when a point on the outer surface of the funnel body portion (10), which is located at a position apart from the seal edge portion (7) toward the neck portion (4) by 30 mm in the direction of the bulb axis (6) in the first funnel section, is defined as P_{B1}, a shortest distance from the point P_{B1} to the bulb axis (6) is shorter than a shortest distance from the point P_{S1} to the bulb axis (6), and
a straight line connecting between the points Pₛ₁ and P_{S1} and a straight line extending parallel with the bulb axis (6) form an acute angle θ₁ of 1 to 7 deg therebetween.

3. The glass funnel according to Claim 2, wherein when a point on the outer surface of the funnel body portion (10) closest to the neck portion (4) in a section containing the bulb axis (6) and extending perpendicular to the first funnel section is defined as P_{T2};
when a point on the outer surface of the funnel body portion (10), which is located at a position apart from a point on an outer periphery of the seal edge portion and closer to the neck portion (4) in the direction of the bulb axis (6), is defined as P_{B3}, the point on the outer periphery of the seal edge portion (7) being locating in a section containing the point P_{T2} and extending parallel with the first funnel section; and
when an acute angle, which is formed between a 5 straight line connecting between the points P_{S3} and P_{B3} and a straight line extending parallel with the bulb axis (6), is defined as θ₃,
the angles θ₃ and θ₁ satisfy a relationship of |θ₁ - θ₃| ≤ 2 deg.

4. The glass funnel according to Claim 1, 2 or 3, wherein when points on the outer surface of the funnel body portion (10), whose tangents form an angle of 70 deg with respect to the bulb axis (6) in the first funnel section, are defined as boundary points; when among the boundary points, a boundary point that is farthest from the bulb axis (6) is defined as a first boundary point (13a); when a boundary point, which is located between the first boundary point (13a) and the bulb axis (6) and is closest to the first boundary point (13a), is defined as a second boundary point (13b); when a portion between the first boundary point (13a) and the second boundary point is defined as a roof portion (14); and when a straight line connecting between the first boundary point (13a) and the second boundary point (13b) is defined as an imaginary roof line (15);
the roof portion (14) has an average curvature radius of 1000 mm or more, the imaginary roof line has a length of 20 to 100 mm, and the imaginary roof line and the bulb axis (6) form an angle of 80 to 100 deg therebetween.

5. A cathode ray tube wherein a glass bulb comprises a glass funnel defined in Claim 1, 2, 3 or 4.
